# EUROPEAN PATENT APPLICATION

(11) **EP 2 639 125 A1**
(43) Date of publication of application: **18.09.2013**
(21) Application number: 12159514.4
(22) Date of filing: 14.03.2012
(51) Int. Cl.: B60T 17/02, F04C 18/344, F04C 27/00

(54) **Automotive vacuum pump**

(71) Applicant: Pierburg Pump Technology GmbH, 41460 Neuss (DE)
(72) Inventor: Testa, Alessandro, 55049 Viareggio (IT)
(74) Representative: Patentanwälte ter Smitten Eberlein Rütten Partnerschaftsgesellschaft

(57) **Abstract**

Automotive vacuum pump (10;10') with a pump chamber housing (12) enclosing a pump chamber (13) and a pump rotor (16) comprising at least one shiftable vane (18) separating the pump chamber (13) in chamber partitions, whereby the vane (18) is provided with a vane body (19; 19') and with a separate vane head (20;20') running at a circumferential wall (14) of the pump chamber housing (12),
whereby the vane head (20; 20') is a cylindrical head roller (22; 22') rotatably supported at the respective longitudinal end of the vane body (19; 19') so that the head roller (22; 22') is rolling sliding-friction-free at the circumferential wall (14).

## Description

The invention refers to an automotive vacuum pump for providing low pressure of a total pressure of 100 mbar and lower for pneumatically driven automotive devices, for example servo brake devices etc. In particular, the invention relates to a vacuum pump for a motor vehicle engine, preferably but not necessarily limited to heavy motor vehicles and/or to high-powered motor vehicles, said vacuum pump being for example intended to create a particular depression to activate and operate specific devices provided on the motor vehicle, such as for example the servobrake.

The typical automotive vacuum pump is provided with a pump chamber housing enclosing a pump chamber wherein a pump rotor is rotating. The vacuum pump can be of the mechanical type being driven by the combustion engine or can be of the electrical type being directly driven by an electric motor. The pump rotor is provided with one or more shiftable vanes separating the pump chamber which is defined by the pump chamber housing into at least two chamber partitions. The shiftable vane(s) is/are provided with one or two separate vane heads running at the circumferential wall of the pump chamber housing.

To ensure a high energetic efficiency of the vacuum pump, the gap between the vane head and the circumferential wall should be as small and as gas-tight as possible. This can be achieved by lubrication with a lubrication liquid. If the vacuum pump should be a dry pump, a significant gap between the vane head and the circumferential housing wall can only be avoided if the vane head is always in touch with the circumferential wall so that sliding friction is not avoidable. This friction can be reduced by providing a separate vane head made out of a material which provides an improved tribological pairing with the circumferential wall material.

It is an object of the invention to provide an automotive vacuum pump with high energetic efficiency and low friction forces.

The automotive vacuum pump according to the invention is provided with a vane head which is realized as a cylindrical head roller which is rotatably supported at the respective longitudinal end of the vane body so that the head roller is rolling without any sliding friction at the circumferential wall. The rotational axis of the head roller is parallel with the rotational axis of the pump rotor.

The sliding-frictional pairing is not the pairing of the vane head and the circumferential housing wall anymore but is now the pairing of the vane body and the vane head. Since the vane head is rolling sliding-friction-free at the circumferential wall, much less abrasion occurs, in contrast to a static friction head made out of graphite. The sliding-friction-free cylindrical head roller provides a gas-tight separation between the chamber partitions separated by the respective vane.

The cylindrical head roller is supported at the longitudinal end of the vane body in a suitable head support which guarantees low friction forces of the pairing head roller/vane body and a good gas-tightness.

According to a preferred embodiment of the invention the head roller is rotatably seated in the head support which is a cylindrical bearing shell with an opening angle of at least 180° so that the head roller is radially movable with respect to the vane body. Since the head roller is radially movable within a small range, the head roller itself can always remain in contact with the circumferential chamber housing wall and can thereby guarantee a high level of gas tightness which thereby avoids unintentional back-flows between the chamber partitions. The head roller is forced radially down to the circumferential wall by centrifugal forces as long as the vane body is rotating.

Preferably, the vane head is provided with a separate bearing adapter of a material different from the vane body material. The bearing adapter is held by to the vane body and is provided with the head support or with the bearing shell. The term "held" can mean that the bearing adapter is radially shiftable guided at the vane body or is totally fixed to the vane body. By using a separate bearing adapter the material pairing of the head roller and the head support or the bearing shell can be chosen without any restrictions with respect to the vane body material and the head roller material. Therefore, the material pairing of the head roller and the bearing shell can be chosen to optimize the mechanical and physical characteristics of this arrangement.

According to a preferred embodiment, the vacuum pump is a dry pump so that no liquid lubrication is provided. As a result, no exhaust of any kind of solid or liquid particles can occur which leads to a non-polluting exhaust gas of the vacuum pump.

Preferably, the axial play between the head roller and the pump chamber housing, i.e. the clearance between the head roller end and a pump chamber side wall, is at least 0,05 mm. The relative local speed of the head roller with respect to the housing covers covering both sides of the circumferential wall is almost zero at the contact line of the head roller with the circumferential wall. In contrast hereto, the local speed of the head roller radially opposite to the contact line is two times of the transitional speed of the head roller. Therefore, an axial play between the housing and the roller head is necessary to guarantee a friction-free rotating of the head roller between the housing covers.

Preferably, the vane body is made out of aluminum. Aluminum is relatively light, very stiff and, as a strand casting profile, cost-effective.

According to a preferred embodiment, the rotating head body is made out of plastic. If a separate bearing adapter is provided, also the bearing adapter can be made out of plastic. However, the plastic material of the rotating head body can be chosen to guarantee a good tribological pairing with the bearing shell or the head support material.

The present invention refers to a single vane vacuum pump comprising one single vane body with two vane heads, i.e. one vane head at every longitudinal end of the vane body, and also refers to a multiple vane vacuum pump comprising two or more separate independent vane bodies with one single vane head only at the outer longitudinal end of the vane body.

Two embodiments of the invention are described referring to the enclosed drawings, wherein
figure 1 shows a first embodiment of an automotive vacuum pump with a vane body and a separate cylindrical head roller, and
figure 2 shows a second embodiment of an automotive vacuum pump with a vane body, a head roller and a separate bearing adapter.

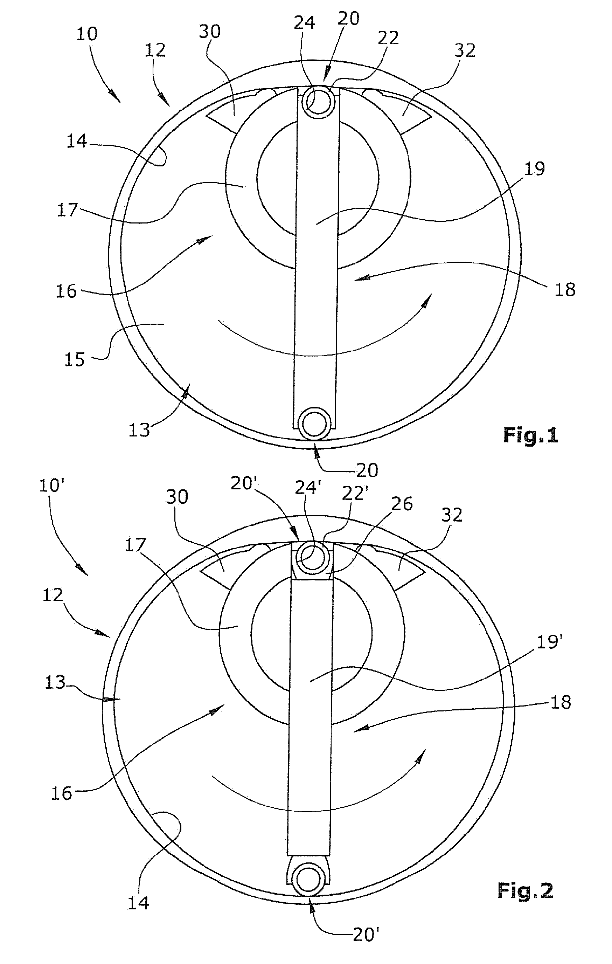

Figures 1 and 2 show an automotive vacuum pump 10; 10' for providing a total pressure of 100 mbar and less for pneumatically driven automotive devices, for example for a servo brake device. The vacuum pumps 10; 10' shown in the two figures are single vane pumps with one single vane 18, whereby the single vane 18 separates the pump chamber 13 into two chamber partitions. The vacuum pumps 10; 10' are both dry pumps so that no liquid lubrication is provided.

Both vacuum pumps 10; 10' are provided with a pump chamber housing 12 defined by a circumferential wall 14 and two housing covers 15, whereby in figures 1 and 2 the top housing cover 15 is removed to make the pump chamber 13 visible which is enclosed and defined by the circumferential wall 14 and the two housing covers 15. The pump chamber 13 is provided with an inlet opening 30 and an outlet opening 32. The inlet opening 30 is provided for being connected to an automotive device, for example to a servo brake device. The outlet opening 32 can be connected to the environmental atmospheric pressure or can be connected to another device which needs high pressure.

The pump rotor 16 is arranged within the pump chamber 13 and can be driven by an internal combustion engine with variable rotational speed or can be driven by a separate electric rotor with a more or less constant rotational speed. The pump rotor 16 consists of the driven rotor body 17 and the vane 18. The vane 18 is supported radially shiftable at the rotor body 17. The vane 18 of the vacuum pump 10 of figure 1, basically consists of an aluminum vane body 19 and two vane heads 20 at both longitudinal ends of the vane body 19. The vane heads 20 are defined by separate hollow cylindrical plastic head rollers 22 which are supported by a cylindrical bearing shell 24 with an opening angle of slightly more than 180° so that the head roller 22 is radially movable with respect to the vane body 19. The axial play between the head roller 22 and the housing cover is at least 0,1 mm, but can be even less if the head rollers 22 are of the same material as the chamber housing 12.

In the second embodiment of figure 2, the vane 18 is provided with a more sophisticated vane head 20¹. The vane head 20' is defined by a separate bearing adapter 26 which is fixed to the vane body 19' and which is provided with the bearing shell 24' for rotatably supporting the head roller 22'. The bearing adapter 26 is made out of plastic. Since a separate bearing adapter is provided, the material pairing of the bearing shell 24' and the head roller 22' can be chosen without any restriction for the material choice for the vane body 19'.

## Claims

1. Automotive vacuum pump (10;10') with a pump chamber housing (12) enclosing a pump chamber (13) and a pump rotor (16) comprising at least one shiftable vane (18) separating the pump chamber (13) into chamber partitions, whereby the vane (18) is provided with a vane body (19; 19') and with a separate vane head (20;20') running at a circumferential wall (14) of the pump chamber housing (12),
whereby the vane head (20; 20') is a cylindrical vane head roller (22; 22') rotatably supported at the respective longitudinal end of the vane body (19; 19') so that the head roller (22; 22') is rolling without sliding-friction at the circumferential wall (14).

2. Automotive vacuum pump (10; 10') of claim 1, whereby the head roller (22; 22') is rotatably seated in a cylindrical bearing shell (24) with an opening angle of at least 180° so that the head roller (22; 22') is radially movable with respect to the vane body (19; 19').

3. Automotive vacuum pump (10') of one of the preceding claims, whereby the vane head (20') is provided with a separate bearing adapter (26) of a material different from the vane body material, whereby the bearing adapter (26) is held by the vane body (19') and is provided with the bearing shell (24').

4. Automotive vacuum pump (10; 10') of one of the preceding claims, whereby the axial play between the head roller (22; 22') and the pump chamber housing (12) is at least 0,05 mm.

5. Automotive vacuum pump (10; 10') of one of the preceding claims, whereby the vane body (19; 19') is made out of aluminum.

6. Automotive vacuum pump (10; 10') of one of the preceding claims, whereby the rotating head body (22; 22') is made out of plastic.

7. Automotive vacuum pump (10') of one of the preceding claims 3 to 6, whereby the bearing adapter (26) is made out of plastic.

8. Automotive vacuum pump (10; 10') of one of the preceding claims, whereby the pump (10; 10') is a dry pump so that no liquid lubrication is provided.
